**Europäisches Patentamt**

**European Patent Office**

**Office européen des brevets**

(19)

(11) Numéro de publication: **0 028 195**
A1

# DEMANDE DE BREVET EUROPEEN

(12)

(21) Numéro de dépôt: **80401513.9**

(22) Date de dépôt: **24.10.80**

(51) Int. Cl.³: **B 60 P 3/34**

---

(30) Priorité: **26.10.79 ES 485459**

(43) Date de publication de la demande: **06.05.81**
**Bulletin 81/18**

(84) Etats contractants désignés: **AT BE CH DE FR GB IT LI LU NL SE**

(71) Demandeur: **Fernandez Lopez, Francisco, c/Lucas Mallada nave 14, Huesca (ES)**

(72) Inventeur: **Fernandez Lopez, Francisco, c/Lucas Mallada nave 14, Huesca (ES)**

(74) Mandataire: **Hoisnard, Jean-Claude et al, Cabinet Beau de Lomenie 55, rue d'Amsterdam, F-75008 Paris (FR)**

---

(54) **Remorque de camping.**

(57) L'invention est relative à une remorque de camping comprenant une caisse creuse 2 munie d'un couvercle 11.

Des barres téléscopiques 7, 8, 9 logées dans la caisse peuvent s'étendre automatiquement et provoquer ainsi le dressage de la tente 4.

Une application est une remorque de camping polyvalente.

**EP 0 028 195 A1**

ACTORUM AG

Remorque de camping.

La présente invention a pour objet une remorque de camping du type comprenant un châssis muni de roues et de moyens de suspension, sur lequel est montée une caisse, elle-même munie d'un couvercle de fermeture supérieur.

On connaît déjà des remorques du type indiqué, dans lesquelles sont logés les éléments nécessaires par exemple pour le montage d'une tente de campagne. Toutefois, dans toutes les formes connues, la remorque sert uniquement de simple caisse contenant la tente et d'autres éléments, qui sont totalement indépendants de la remorque, de sorte qu'il est nécessaire d'extraire la toile de tente, l'armature et les autres accessoires de la tente pour procéder au montage de cette dernière à l'emplacement choisi du campement, indépendamment de la remorque.

Le but de l'invention est de réaliser une remorque dans laquelle soit montée, en position pliée, une tente de campagne dont le dressage s'effectue sur la remorque elle-même qui, avec son couvercle, définit le plancher de la tente.

Un autre but de l'invention est de réaliser une remorque dans laquelle soit montée en position pliée une tente capable de se dresser automatiquement lorsqu'on ouvre la remorque, en éliminant ainsi le travail de montage ou dressage de la tente, la seule opération nécessaire pour ranger la tente consistant à agir sur des éléments télescopiques déterminés de son armature pour permettre leur repliage, combiné à celui du toit et des parois de la tente et le rangement de l'ensemble à l'intérieur de la caisse de la remorque.

L'invention est donc relative à une remorque de camping comprenant un châssis muni de roues et de moyens de suspension, sur lequel est montée une caisse munie d'un couvercle.

La caisse est ouverte sur sa base supérieure et l'une de ses petites parois, le couvercle présentant des parois qui s'emboîtent extérieurement sur les parois de la caisse, l'une des petites parois de ce couvercle étant d'une hauteur suffisante pour fermer la petite paroi ouverte de la caisse, cependant que cette caisse porte, montés sur son fond, à proximité de ladite paroi ouverte, deux supports latéraux sur chacun desquels est articulée une structure plane longitudinale pliable, chacune de ces structures étant définie par trois barres télescopiques contenues dans un même plan et munies de moyens d'extension, ces barres étant articulées sur le support par leurs extrémités inférieures, tandis que, à leurs extrémités, est fixé le toit d'une tente, de manière que les deux structures puissent être rabattues, en même temps que la tente pliée, sur le fond de la caisse, et retenues par le couvercle, et, que, lorsqu'elles sont libérées de ce couvercle, les barres des deux armatures s'étendent automatiquement, la barre centrale restant en position verticale et les deux autres barres, une de chaque côté, prenant une inclinaison approximative de 45°, en dressant ainsi automatiquement la tente, laquelle est de largeur égale à celle de la caisse mais de longueur approximativement double de celle de cette dernière.

Les avantageuses dispositions suivantes sont, en outre, de préférence, adoptées :

- la remorque comprend un bâti présentant la configuration d'un porte-bagages, situé extérieurement sur le couvercle de la caisse, ce bâti servant en même temps, lorsqu'il est disposé sur le sol, dans le prolongement de la caisse, sur le côté de la paroi ouverte de cette caisse, de base sur laquelle on dispose le couvercle de la caisse en position retournée pour définir le sol de la partie de la tente qui déborde de ladite caisse ;

- le couvercle est articulé sur la caisse par le bord de sa paroi de grande hauteur, de manière que, lorsqu'on ouvre et qu'on rabat le couvercle sur le bâti qui sert de base sur le sol, ladite paroi serve de fermeture contre la remorque ;

- les moyens d'extension des barres télescopiques sont constitués par des ressorts de compression montés entre deux tronçons consécutifs de chaque barre.

Avec la constitution de cette remorque, on obtient une parfaite fermeture de la caisse lorsque les parois du couvercle s'emboîtent à l'extérieur des parois de la caisse.

Lorsqu'on soulève le couvercle de la caisse, alors que la tente et les barres composant les deux armatures sont convenablement pliée et rangées, respectivement, dans cette caisse, lesdites barres tendent automatiquement à se mettre en extension. La barre centrale étant dressée verticalement et les deux barres latérales étant orientées à 45°, le toit de la tente se trouve être totalement étendu, de même que ses parois latérales. Pour le rangement de la tente, on effectue la rétraction des barres télescopiques, en pliant le toit et les parois latérales de la tente et en abattant tout l'ensemble sur le fond de la caisse de la remorque.

La tente déborde de la remorque sur le côté où la caisse est privée de sa petite paroi. Dans ces conditions, la remorque définit la moitié du fond de la tente. Pour l'autre moitié, qui déborde de la remorque, le fond est constitué par le couvercle de la caisse placé en position retournée sur un bâti ou une armature qui, pour le déplacement, est situé sur le couvercle de la remorque pour servir de porte-bagages.

Dans la position dressée de la tente, il existe un gradin entre la zone du sol de la tente définie par le fond de la caisse et la zone du sol définie par le couvercle de cette caisse. Ce gradin est fermé par la paroi de grande hauteur de la caisse, laquelle peut être articulée au fond de cette caisse.

Les caractéristiques exposées, ainsi que d'autres, qui sont propres à l'invention, seront mieux comprises à la lecture de la description qui va suivre, faite en référence aux dessins annexés, sur lesquels on montre une forme possible d'exécution donnée à titre d'exemple non limitatif.

Sur ces dessins :

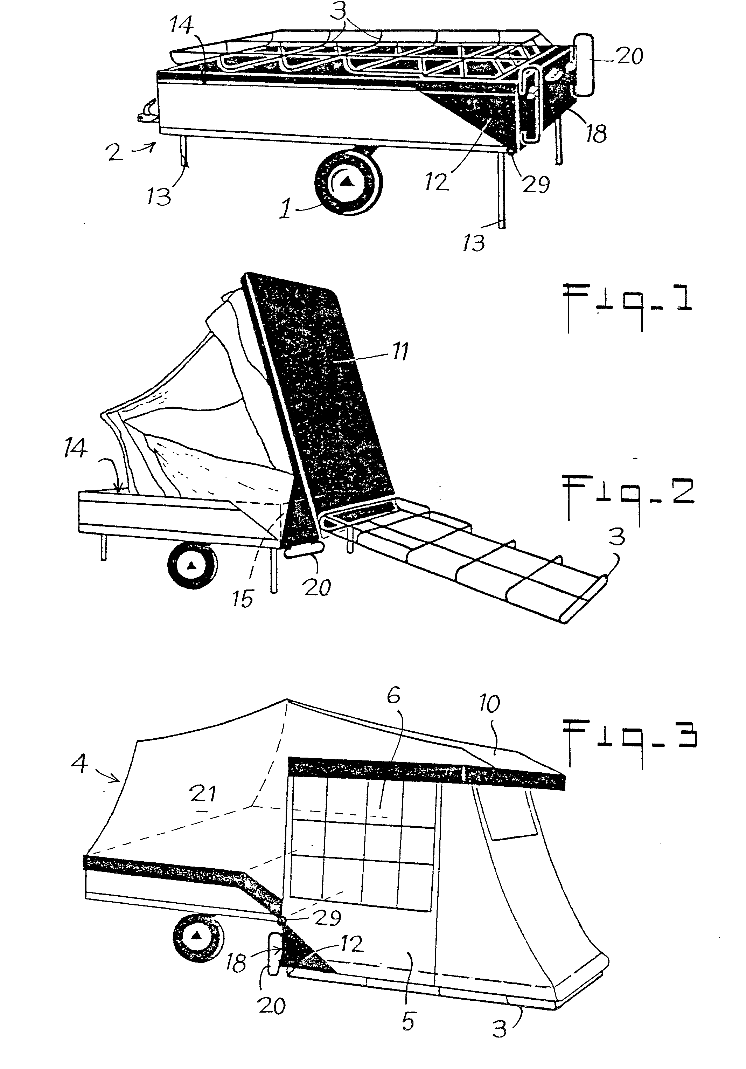

- la figure 1 est une vue en perspective de la remorque de camping suivant l'invention en position pliée ;

- la figure 2 est une vue en perspective analogue à celle de la figure 1, la tente étant en cours de déploiement ;

- la figure 3 est une vue analogue aux figures précédentes, mais la tente étant entièrement déployée ;

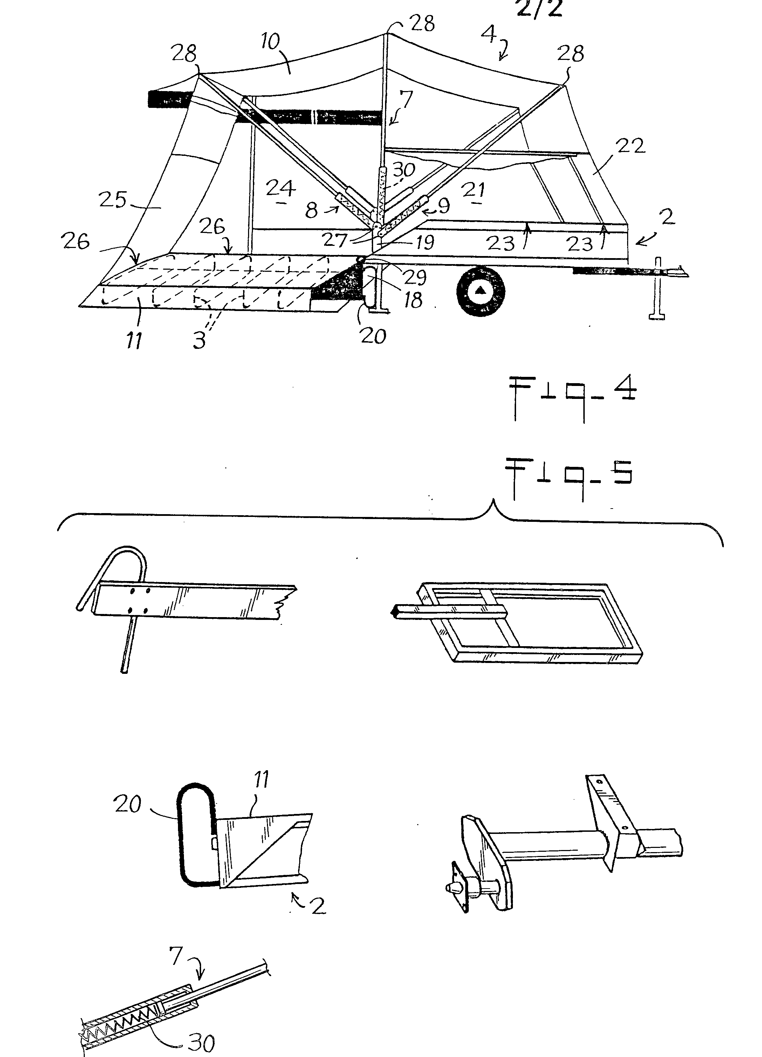

- la figure 4 est une vue en perspective sur laquelle la tente est déployée et où l'on a supprimé la partie antérieure de cette tente pour laisser voir la structure de support de la tente ; et,

- la figure 5 représente cinq détails de la construction de la remorque.

Comme on peut le voir sur les dessins, la remorque comprend un châssis équipé de moyens de suspension et monté sur deux roues désignées par la référence 1. Sur ce châssis, est montée la caisse 2 qui se ferme au moyen d'un couvercle désigné par la référence 11. Lorsque la caisse est fermée, il est prévu, sur le couvercle, un bâti ou une armature 3 présentant la forme d'un porte-bagages, qui prend appui sur le couvercle de la caisse par l'intermédiaire d'amortisseurs pour éviter les frottements et les bruits.

La remorque dispose de béquilles repliables 13, qui permettent un appui parfait de la caisse 2 lorsque la remorque est au repos.

La caisse 2 est ouverte sur sa base supérieure 14, ainsi que sur l'une, 15, des petites parois latérales, tandis que le couvercle comprend une paroi latérale qui s'emboîte extérieurement sur les parois de la caisse 2, l'une, 18, des parois transversales étant de hauteur suffisante pour fermer la petite paroi ouverte 15 de la caisse 2. Dans les régions adjacentes à cette paroi 18 de grande hauteur, le couvercle comporte des bordures ou goussets latéraux de fermeture 12. Sur le sol de la caisse 2 sont montés, à proximité de sa petite paroi ouverte et dans des positions adjacentes aux parois longitudinales, deux supports 19 sur chacun desquels sont articulées trois barres désignées par les références 7, et, 8 et 9, qui sont télescopiques et équipées de moyens propres d'extension, lesquels peuvent être constitués, par exemple, par un ressort de compression 30 monté entre les deux tronçons consécutifs de chaque barre. Les trois barres de chaque ensemble sont contenues dans un même plan et, lors de l'ouverture de la caisse, il se produit l'extension automatique de ces barres, provoquant ainsi le dressage automatique de la tente 4, dont le toit 10 est fixé aux extrémités supérieures 28 des barres précitées. La barre 7 est dressée verticalement, les barres 8 et 9 étant inclinées d'environ 45° par rapport à cette barre 7. Ces barres sont articulées (27) sur les supports 19.

Comme on peut le voir sur les dessins, la tente est de largeur égale à celle de la remorque, mais de longueur approximativement double de celle de cette remorque, de sorte que le fond de la caisse 2 sert de sol partiel pour la tente. Le reste du sol est constitué par le couvercle 11, placé en position inversée sur l'armature ou le bâti 3 qui sert de base d'appui sur le sol. La paroi transversale 18 de grande hauteur du couvercle ferme le gradin formé entre les deux zones du sol de la tente, cette paroi pouvant être articulée (29) à la remorque. Pour faciliter la manipulation lors de l'ouverture et de la fermeture de l'ensemble, le couvercle présente, sur sa paroi transversale 18 de grande hauteur , des poignées 20 ainsi que des éléments de verrouillage de la fermeture.

Ainsi qu'il ressort des dessins, les parois latérales 21 et l'une 22 des parois transversales de la tente sont fixées par leurs bords inférieurs 23 aux parois de la caisse, le reste 24 de ces parois latérales et l'autre petite paroi transversale 25 se fixant (26) au couvercle qui définit le fond de la partie extérieure de la tente.

La tente 4 peut former ainsi une chambre à coucher intérieure et un hall 5 qui peut également être utilisé comme chambre à coucher. Les parois peuvent être munies de zones vitrées, par exemple à base de feuilles plastiques transparentes 6. Ainsi qu'il va de soi, les parois et le toit de la tente sont faits de matières traditionnelles appropriées.

Dans la caisse 2, se logent les armatures formées par les barres extensibles, ainsi que les parois et le toit de la toile de tente pliée, ainsi que d'autres éléments tels que des matelas et autres accessoires de camping.

Par ailleurs, l'essieu du véhicule peut être constitué par une barre hexagonale équipée de trois barres cylindriques en caoutchouc munies d'un demi-collier de fixation, l'ensemble étant fermé par un profil triangulaire qui évite tout déplacement.

De plus, la remorque est équipée de ses propres moyens de signalisation et d'attelage au véhicule tracteur.

La nature de l'invention étant ainsi décrite, de même que le mode de mise en oeuvre pratique, il convient de faire remarquer que les dispositions indiquées plus haut sont susceptibles de modifications de détail, pourvu que ces modifications n'altèrent pas son principe fondamental.

REVENDICATIONS

1 - Remorque de camping comprenant un châssis muni de roues et de moyens de suspension, sur lequel est montée une caisse munie d'un couvercle,

caractérisée en ce que la caisse est ouverte sur sa base supérieure et l'une de ses petites parois, le couvercle présentant des parois qui s'emboîtent extérieurement sur les parois de la caisse, l'une des petites parois de ce couvercle étant d'une hauteur suffisante pour fermer la petite paroi ouverte de la caisse, cependant que cette caisse porte, montés sur son fond, à proximité de ladite paroi ouverte, deux supports latéraux sur chacun desquels est articulée une structure plane longitudinale pliable, chacune de ces structures étant définie par trois barres télescopiques contenues dans un même plan et munies de moyens d'extension, ces barres étant articulées sur le support par leurs extrémités inférieures, tandis que, à leurs extrémités supérieures, est fixé le toit d'une tente, de manière que les deux structures puissent être rabattues, en même temps que la tente pliée, sur le fond de la caisse, et retenues par le couvercle, et, que, lorsqu'elles sont libérées de ce couvercle, les barres des deux armatures s'étendent automatiquement, la barre centrale restant en position verticale et les deux autres barres, une de chaque côté, prenant une inclinaison approximative de 45°, en dressant ainsi automatiquement la tente, laquelle est de largeur égale à celle de la caisse mais de longueur approximativement double de celle de cette dernière.

2 - Remorque selon la revendication 1, caractérisée en ce qu'elle comprend un bâti présentant la configuration d'un porte-bagages, situé extérieurement sur le couvercle de la caisse, ce bâti servant en même temps, lorsqu'il est disposé sur le sol, dans le prolongement de la caisse, sur le côté de la paroi ouverte de cette caisse, de base sur laquelle on dispose le couvercle de la caisse en position retournée pour définir le sol de la partie de la tente qui déborde de ladite caisse.

3 - Remorque selon l'une quelconque des revendications 1 et 2, caractérisée en ce que le couvercle est articulé sur la caisse par le bord de sa paroi de grande hauteur, de manière que, lorsqu'on ouvre et qu'on rabat le couvercle sur le bâti qui sert de base sur le sol, ladite paroi serve de fermeture contre la remorque.

4 - Remorque selon la revendication 1, caractérisée en ce que les moyens d'extension des barres télescopiques sont constitués par des ressorts de compression montés entre deux tronçons consécutifs de chaque barre.

Fig.1

Fig.2

Fig.3

Fig-4

Fig-5

0028195
Numéro de la demande

**Office européen des brevets**

**RAPPORT DE RECHERCHE EUROPEENNE**

EP 80 40 1513

| DOCUMENTS CONSIDERES COMME PERTINENTS | | | CLASSEMENT DE LA DEMANDE (Int. Cl. 3) |
|---|---|---|---|
| Catégorie | Citation du document avec indication, en cas de besoin, des parties pertinentes | Revendica-tion concernée | |
| X | FR - A - 1 467 907 (LUSSATO)<br>* En entier; figures 1-3 * | 1-4 | B 60 P  3/34 |
| X | DE - A - 1 211 080 (BUTTENSCHØN)<br>* Revendication; figures 1-3 * | 1-3 | |
| X | AU - A - 14 786/66 (WARD)<br>* Revendications; figures 1-5 * | 1-3 | |
| X | FR - A - 1 214 306 (ROY)<br>* Résumé; figures 2,8 * | 1-3 | |
| X | US - A - 4 088 363 (PALMER)<br>* Revendication; figures 1,2,4 * | 1-3 | |
| X | FR - A - 2 186 371 (SEGARD)<br>* Revendication; figures 1-4 * | 1-3 | |
| X | FR - A - 807 639 (BERGER)<br>* Résumé; figures 1-3 * | 1-3 | |

**DOMAINES TECHNIQUES RECHERCHES (Int. Cl. 3)**

B 60 P-

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 06-01-1981 | PIRIOU |

OEB Form 1503.1  06.78